# EUROPÄISCHE PATENTSCHRIFT

(11) **EP 2 302 146 B1**
(45) Veröffentlichungstag und Bekanntmachung des Hinweises auf die Patenterteilung: **09.09.2015**
(21) Anmeldenummer: 10182260.9
(22) Anmeldetag: 12.07.2001
(51) Int. Cl.: E04C 5/08, E04C 5/10, E04C 5/12, E04H 12/16, F03D 11/04, E04C 3/22, E04C 3/26, E04C 3/34, F03D 1/00

(54) **Turm aus Spannbeton-Fertigteilen**
Tower made of prestressed concrete prefabricated assembly units
Tour constituee d'elements prefabriques en beton precontraint

(30) Priorität: 12.07.2000 DE 10033845
(43) Veröffentlichungstag der Anmeldung: 30.03.2011
(62) Teilanmeldung aus: 01969376.1
(73) Patentinhaber: Wobben Properties GmbH, 26605 Aurich (DE)
(72) Erfinder:
(74) Vertreter: Eisenführ Speiser

(56) Entgegenhaltungen:
- EP-A1- 0 758 034
- WO-A1-86/02689
- FR-A1- 2 202 202
- FR-A1- 2 775 492

## Beschreibung

Türme aus Spannbeton-Fertigteilen sind allgemein bekannt und werden für die vielfältigsten Einsatzzwecke verwendet. Als Beispiel sei hier die Verwendung als Antennenträger für Telekommunikationseinrichtungen genannt.

Der Einsatz von Spannbeton-Fertigteilen hat gegenüber der Errichtung von Türmen mit einer Kletterschalung oder einer Gleitschalung den Vorteil einer wirtschaftlich günstigeren Herstellungsmöglichkeit der Fertigteile unter vorgegebenen Bedingungen. Dadurch kann ein großer Teil der Arbeit bereits fern der Baustelle ausgeführt werden. Weiterhin ist es so besser möglich, vorgegebene Qualitätsanforderungen zu erfüllen und deren Einhaltung zu überwachen und der Turm kann dann auf der Baustelle in kurzer Zeit errichtet werden.

Dazu werden die Spannbeton-Fertigteile mit in die Turmwandung eingearbeiteten Hüllrohren für die Spann-Mittel auf der Baustelle zusammengefügt. Dabei wird zur Verbindung der einzelnen Fertigteile als Segmente des Turms untereinander eine Betonmischung in die Fugen zwischen den Segmenten eingebracht, um einen flächigen Kraftschluss zwischen den Fertigteilen zu erreichen. Die in die Hüllrohre eingezogenen Spann-Mittel werden sodann gespannt und danach werden die Hüllrohre unter hohem Druck mit einer Betonschlämme verfüllt und verpresst, um eine innige Verbindung zwischen Spann-Mittel und Turm herzustellen.

Das Verpressen der Spann-Mittel in den Hüllrohren muss unter hohem Druck erfolgen, damit die Betonschlämme in den Hüllrohren aufsteigen und diese bis zur Spitze des Turmes mit dem erforderlichen Druck ausfüllen kann. Dieser erforderliche Druck kann bei 80m hohen Türmen durchaus Werte von 200 bar erreichen. Dabei besteht allerdings im Stand der Technik das Problem, dass die unter hohem Druck stehende Betonschlämme an den Stoßstellen zwischen den einzelnen Segmenten austreten kann, da der Beton dazwischen in Folge seiner Materialeigenschaften spröde und porös ist und deshalb der Übergang zwischen den Segmenten nicht zuverlässig abgedichtet ist.

Daher kann es erforderlich sein, mit dem untersten Segment beginnend am Turm aufsteigend an jeder Stoßstelle zwischen übereinander liegenden Segmenten einen Zugang für die Injektion der Betonschlämme vorzusehen und die Betonschlämme dort zuzuführen, um die Hüllrohre des jeweils darüber liegenden Segmentes zu verpressen.

Als Spann-Mittel kommen in Deutschland Spannstäbe und Spannlitzen in Betracht. Der Einsatz von Spannstäben unterliegt jedoch der Einschränkung, dass sie ausschließlich bei geraden Spannwegen einsetzbar sind. Damit sind jedoch die Möglichkeiten für die Kontur eines Turmes aus Spannbeton-Fertigteilen beim Einsatz von Spannstäben begrenzt, da diese stets geradlinig sein muss. Das heißt, die Errichtung eines konischen Turmes mit Spannstäben ist möglich, solange sich der Querschnitt des Turmes geradlinig verjüngt.

Zur Errichtung eines konischen Turmes mit geschwungener Kontur kommt daher nur der Einsatz einer Spannlitze in Betracht. Die Spannlitze wird entweder von der Spitze des Turmes aus in die Hüllrohre der Segmente durchgehend bis zum Fuß des Turmes oder vom Fuß des Turmes aus durchgehend bis zur Spitze des Turmes eingezogen. Dabei ergibt sich allerdings das Problem, dass die Spannlitze von der Turmspitze bis zum Fußbereich entlang der gekrümmten Kontur die Stoßstellen zwischen den einzelnen Segmenten überwinden muss. In Folge der Krümmung besteht jedoch stets die Gefahr, dass die Litze insbesondere an einer solchen Stoßstelle nicht der Krümmung folgt, sondern sich an der Stoßstelle festsetzt und nur unter großem Aufwand weitergeführt werden kann.

FR 2 202 202 A zeigt eine Dichtung zum Schaffen eines druckdichten Übergangs zwischen zwei übereinander angeordneten Spannbeton-Fertigelementen.

WO 86/02689 A1 zeigt eine Dichtung zum Schaffen eines druckdichten Übergangs zwischen zwei übereinander angeordneten Spanneton-Fertigelementen.

Der Erfindung liegt daher die Aufgabe zu Grunde, eine Dichtung zum Platzieren zwischen zwei aufeinander angeordneten Spannbeton-Fertigelementen eines Turms vorzusehen, um ein Austreten von Betonschlämmen zu vermeiden.

Um dem Problem der austretenden Betonschlämme beim Verpressen der Hüllrohre entgegenzuwirken, ist erfindungsgemäß eine Dichtung vorgesehen, die zwischen zwei Segmenten dort eingefügt wird, wo sich die Hüllrohre in den Segmenten gegenüberstehen. Die Dichtung weist eine Höhe auf, die mindestens dem vorgesehenen Abstand der Segmente entspricht, um eine Dichtwirkung zu erzielen.

In einer besonders bevorzugten Ausführungsform der Erfindung ist die Dichtung um mehr als das Maß der Oberflächenrauhigkeit höher als der vorgegebene Abstand zwischen den Segmenten.

Da die Dichtung und die trichterförmige Vorrichtung an Positionen auf dem Umfang der Segmente vorgesehen sind, an denen sich die eingearbeiteten Hüllrohre gegenüberstehen, weist die Dichtung bevorzugt die gleiche Querschnittsform auf, wie die trichterförmige Vorrichtung.

Besonders bevorzugt vergrößert sich die lichte Weite der Dichtung zu dem unterhalb derselben angeordneten Segment hin, während die zu dem oberhalb der Dichtung angeordneten Segment weisende Seite der Dichtung wenigstens die gleiche Größe des Querschnitts in ihrer lichten Weite aufweist, wie jedes der Hüllrohre in dem Segment. Dadurch ergibt sich eine Querschnitt-Erweiterung der Dichtung zu der trichterförmigen Vorrichtung hin, so dass deren Vorteil voll genutzt werden kann.

In einer weiterhin bevorzugten Ausführungsform der Erfindung folgt die äußere Umfangsfläche der Dichtung im Wesentlichen der Veränderung der lichten Weite und verringert sich daher in Richtung auf den kleineren Querschnitt. Dadurch bleibt dieser Bereich der Dichtungswand als oberer Abschnitt der Dichtung ausreichend verformbar und wird durch innerhalb der Dichtung auftretenden Druck nach außen und damit gegen das benachbarte Segment gepresst.

Der Übergang zwischen der inneren Wandung und der äußeren Wandung des oberen Abschnittes der Dichtung ist so ausgebildet, dass er in einem spitzen Winkel zu der äußeren Wandung und einem stumpfen Winkel zu der inneren Wandung und damit im Wesentlichen vertikal verläuft.

Dadurch ergibt sich auch bei horizontal herabgedrücktem, oberen Abschnitt der Dichtung am Übergang zwischen innerer und äußerer Wandung eine die Dichtung mit ihrem oberen Abschnitt stärker gegen das Segment drückende Kraft, weil der Übergang auch in dieser Situation noch eine aufwärts verlaufende Oberfläche aufweist.

In einer insbesondere bevorzugten Ausführungsform der Erfindung ist an der Unterseite der Dichtung, der Seite mit dem größeren Querschnitt, ein Wulst angeformt, der in seinen Abmessungen und seiner Form der an der trichterförmigen Vorrichtung vorgesehenen Aufnahmevorrichtung für eine Dichtung entspricht. Dadurch kann die Dichtung sicher in ihrer Position gehalten werden, so dass ein Verrutschen der Dichtung und eine Beeinträchtigung des Montagevorgangs verhindert wird.

In einer bevorzugten Weiterbildung weist die erfindungsgemäße Dichtung oberhalb des Wulstes an ihrem äußeren Umfang nach außen gerichtete, umlaufende Auskragung auf. Diese Auskragung hat eine vorgegebene Höhe und Breite und überragt um dieses Maß den oberen, umlaufenden Rand der Vorrichtung. Diese Auskragung erhöht einerseits die Biegesteifigkeit des in der Vorrichtung aufgenommenen Wulstes und dient andererseits als Barriere für eine Verbundmasse zwischen den Segmenten, um zu verhindern, dass diese Verbundmasse während der Errichtung des Turmes auf die Oberseite der Dichtung gelangt.

Zur Vereinfachung des Arbeitsablaufes insbesondere auf der Baustelle kann die Vorrichtung bereits bei der Herstellung der Segmente mit einer entsprechenden Ausrichtung in das Segment integriert werden. Dabei wird diese besonders bevorzugt so integriert, dass die Oberkante der Vorrichtung, also die Seite mit dem größeren Querschnitt, bündig mit der Oberseite des Segmentes abschließt.

In einer weiteren Ausführungsform der Erfindung wird während der Herstellung der Segmente die Form der trichterförmigen Vorrichtung in der Wandung des Segmentes ausgebildet. Dadurch kann bei gleicher Funktionalität einerseits das Material für die Vorrichtung und andererseits der Arbeitsschritt des Einsetzens der Vorrichtung eingespart werden.

Um zu vermeiden, dass Stoßstellen lediglich verlagert werden, ist der Abstand zwischen der Hüllrohr-seitigen Öffnung der Vorrichtung und dem benachbarten Rand des Hüllrohres vernachlässigbar klein, so dass die trichterförmige Vorrichtung und das Hüllrohr ineinander übergehen.

Um Transport- und Handhabungsprobleme zu verringern, ist jedes Voll-Segment parallel zu seiner Hochachse in wenigstens zwei Teil-Segmente aufgeteilt.

Desweiteren wird bei der Errichtung des Turmes aus Segmenten als Verbundmasse zwischen den Segmenten an Stelle des porösen Beton ein Polymer wie z. B. Epoxidharz verwendet. Dieses Epoxidharz weist im ausgehärteten Zustand die gleichen Festigkeitseigenschaften wie Beton auf, ist jedoch nicht so porös und spröde, und schafft somit eine mechanisch gleichwertige aber gleichzeitig dichte Verbindung zwischen den Segmenten.

Um eine ausreichend sichere Verbindung der Segmente zu erreichen, wird die Verbundmasse bevorzugt vollflächig aufgetragen. Dabei werden allerdings die trichterförmigen Öffnungen und die Öffnungen der Hüllrohre ausgespart, um hier keine neuen Barrieren für die einzuziehende Spannlitze und die Betonschlämme zu schaffen.

Desweiteren sind wenigstens drei Abstandhalter vorgesehen, die vor dem Zusammenfügen der Segmente dazwischen eingefügt werden. Diese tragen das jeweils aufliegende Segment, bis die Verbundmasse ausgehärtet ist.

Dabei sind diese Abstandhalter besonders bevorzugt aus einem Material wie z.B. Holz, das ein geringeres E-Modul aufweist, als die ausgehärtete Verbundmasse. Dadurch wird einerseits erreicht, das sich die Abstandhalter bei Unebenheiten der zueinander gewandten Flächen der Segmente entsprechend verformen und ein Abplatzen von Teilen der Wandung der Segmente verhindern. Andererseits nimmt aber nach dem Aushärten der Verbundmasse diese an Stelle der "weichen" Abstandhalter die Belastungen auf und leitet sie entsprechend ab.

Das E-Modul der Abstandhalter liegt bevorzugt in einem Bereich zwischen 3000 N/mm² und 5000 N/mm², um die erforderliche Fläche der Abstandhalter in Grenzen halten zu können, während die Verbundmasse bevorzugt ein E-Modul > 5000 N/mm² aufweist.

Desweiteren wird es durch das Zusammenwirken der trichterförmigen Vorrichtung, der Dichtung und der Verbundmasse möglich, bei einem Turm aus Segmenten die Spannseile in die Hüllrohre einzuziehen und zu spannen und sodann vom Fuß des Turmes in die Hüllrohre z. B. eine Betonschlämme unter einem so hohen Druck hinein zu pressen, dass die Betonschlämme bis zur Turmspitze hin aufsteigt, ohne an einer Stoßstelle zwischen zwei Spannbeton-Fertigelementen auszutreten.

Vorteilhafte Weiterbildungen der Erfindung sind in den Unteransprüchen beschrieben.

Im Folgenden wird eine Ausführungsform der Erfindung anhand der beigefügten Zeichnungen näher beschrieben. Dabei zeigen:
Figur 1 eine quergeschnittene Seitenansicht einer trichterförmigen Vorrichtung;
Figur 2 eine quergeschnittene Seitenansicht einer erfindungsgemäßen Dichtung;
Figur 3 eine vergrößerte Darstellung des Übergangs in Fig 2;

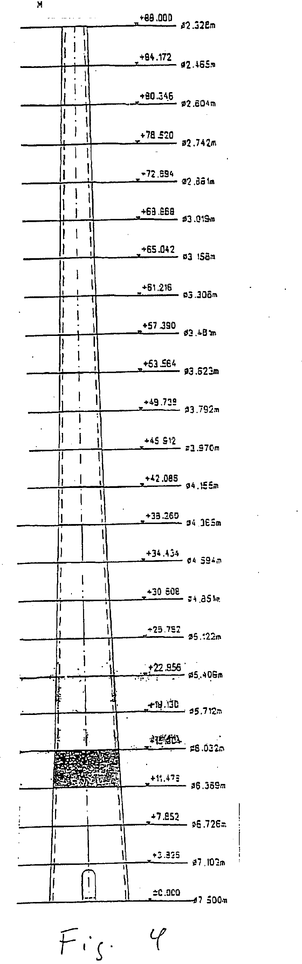

Figur 4 ausschnittsweise zwei übereinander angeordnete und miteinander verbundene Segmente;
Figur 5 eine Draufsicht auf ein Vollsegment;
Figur 6 eine Schnittdarstellung eines Vollsegments nach Figur 5;
Figur 7 Segmente in eingebauter Position; und
Figur 8 einen Querschnitt eines erfindungsgemäßen Turms.

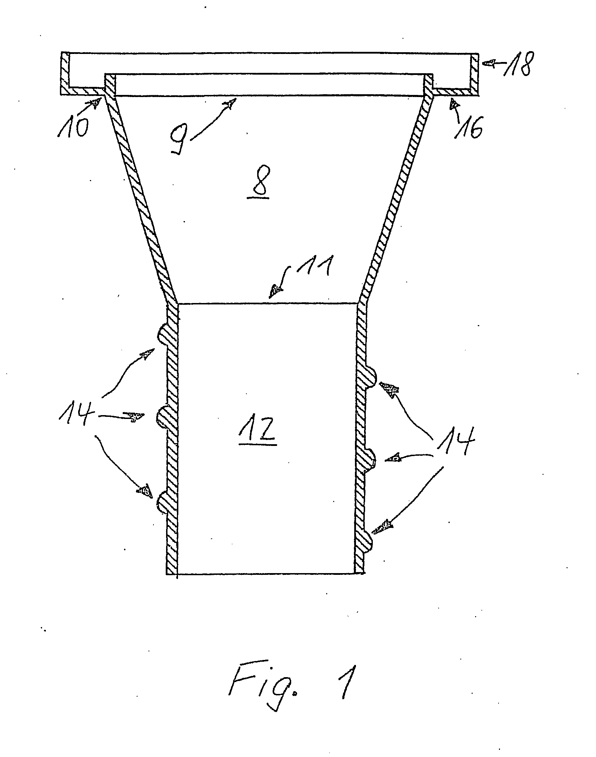

In Figur 1 ist eine Seitenansicht einer trichterförmigen Vorrichtung 8 zum Führen einer Spannlitze (nicht dargestellt) in einer Schnittdarstellung gezeigt. Der Querschnitt in der (nicht dargestellten) Draufsicht ist in diesem Ausführungsbeispiel bevorzugt rund, kann jedoch auch vieleckig sein, um z. B. eine Verdrehsicherheit einzuführen.

Der zentrale Teil dieser Vorrichtung 8 ist ein trichterförmiger Abschnitt 8 mit einer aufwärts weisenden Öffnung 9 und einer abwärts weisenden Öffnung 11. Die aufwärts weisende, kreisrunde Öffnung 9 weist bei einer Querschnittsfläche von ca. 254 cm² mit etwa 90mm einen größeren inneren Durchmesser auf, als die abwärts weisende Öffnung 11 mit einem inneren Durchmesser von etwa 53mm.

Dabei entspricht der kleinere, also der abwärts weisende Querschnitt 11 im Wesentlichen dem Querschnitt von Hüllrohren 7, die während der Herstellung der Segmente 4, 6 in deren Wandung integriert werden und zur Aufnahme der Spannlitzen (oder der Spannstäbe) vorgesehen sind. Dadurch kann eine am größeren Querschnitt 9 eintretende Spannlitze durch die Trichterform so geführt werden, dass sie glatt in das unterhalb der trichterförmigen Vorrichtung 8 anschließende Hüllrohr 7 übergehen kann.

In einer Ausführungsform wurde für die trichterförmige Vorrichtung 8 ein Öffnungswinkel von etwa 40° gewählt. Dieser Öffnungswinkel kann jedoch abhängig von konstruktiven Vorgaben der Segmente in einem weiten Bereich von 10° bis 150° variieren.

An der kleineren Öffnung 11 der Vorrichtung 8 schließt ein rohrförmiger Abschnitt 12 an, der mit einem Außengewinde 14 versehen ist. Dieser Abschnitt 12 kann in ein Hüllrohr 7 eingeschraubt werden und bewirkt so einerseits eine genaue und reproduzierbare Positionierung der Vorrichtung 8 und andererseits eine noch weitergehende Führung der Spannlitze. Außerdem ist damit sichergestellt, dass die Vorrichtung 8 sich unabhängig von der Transportlage nicht ungewollt vom Hüllrohr 7 lösen kann.

Der rohrförmige Abschnitt 12 weist einen Querschnitt auf, der im Wesentlichen demjenigen des Hüllrohres 7 entspricht. In diesem Ausführungsbeispiel ist er natürlich geringfügig kleiner, damit ein Einschrauben ermöglicht wird.

Der äußere Umfangsrand 10 am größeren Querschnitt 9 ist etwa 7mm aufwärts verlängert, wobei in diesem Bereich der Querschnitt jedoch konstant bleibt, d. h., der Umfangsrand 10 verläuft vertikal. An diesen Umfangsrand 10 schließt am Übergang von dem trichterförmigen Abschnitt 8 zu dem vertikal verlaufenden Teil des Umfangsrandes 10 eine im Wesentlichen horizontal verlaufende, den Umfangsrand 10 ringförmig umschließende Auflagefläche 16 an, die z. B. eine Dichtung 20 tragen kann. Die Breite dieser Auflagefläche 16 orientiert sich an der für die Dichtung 20 erforderlichen Auflagefläche und beträgt in der vorliegenden Ausführungsform etwa 10mm.

Ein zusätzlicher umlaufender Rand 18 ist wiederum senkrecht am äußeren Rand der Auflagefläche 16 vorgesehen und verläuft von der Auflagefläche 16 aus ca. 10mm aufwärts. Damit ergibt sich eine zusätzliche seitliche Abstützung für eine in diese aus Umfangsrand 10, Auflagefläche 16 und umlaufendem Rand 18 gebildete Aufnahme einzulegende Dichtung 20, die ein Verrutschen der Dichtung 20 wirksam verhindert.

In einer alternativen, nicht dargestellten Ausführungsform kann die Auflagefläche 16 in einem spitzen Winkel zu dem Umfangsrand 10 verlaufen. Durch diese Anordnung kann bei einem einfacheren Aufbau ebenfalls eine zusätzliche Stützwirkung für eine entsprechend geformte Dichtung 20 erreicht werden.

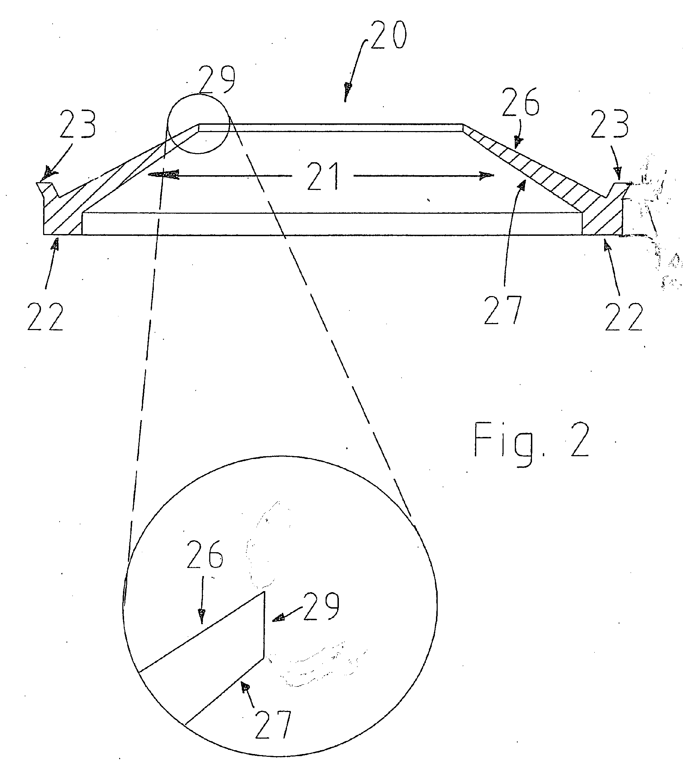

In Figur 2 ist eine erfindungsgemäße Dichtung 20 in einer ersten Ausführungsform dargestellt. Diese Dichtung 20 besitzt in der (nicht dargestellten) Draufsicht ebenso wie die Vorrichtung 8 einen kreisrunden Querschnitt. In der im Querschnitt dargestellten Seitenansicht zeigt die Dichtung 20 eine sich verändernde lichte Weite 21. Diese vergrößert sich zum unteren Rand der Dichtung 20 hin. Dabei ist allerdings der Durchmesser am oberen Rand der Dichtung 20 mit etwa 70mm noch größer als der innere Durchmesser von standardmäßig verwendeten Hüllrohren 7 mit ca. 60mm. Der Innendurchmesser der Dichtung 20 beträgt an ihrem unteren Rand etwa 95mm und entspricht damit dem Außendurchmesser der Vorrichtung 8 an ihrem äußeren Umfangsrand 10.

Der äußere Umfangsrand der Dichtung 20 ist im Bereich des unteren Randes als Wulst 22 ausgebildet, dessen Abmessungen mit einer Höhe von etwa 7mm im Inneren der Dichtung, ca. 10mm Höhe am Außenumfang und einer Breite von ebenfalls etwa 10mm so gewählt sind, dass sie den Abmessungen der aus Umfangsrand 10, Auflagefläche 16 und umlaufendem Rand 18 gebildeten Aufnahme der Vorrichtung 8 entsprechen. Die Dichtung 20 passt daher genau in diese Aufnahme und zur Fixierung der Dichtung 20 kann zwischen der Vorrichtung 8 bzw. deren Auflagefläche 16 und der Dichtung 20 eine Klebstoffschicht oder ähnliches vorgesehen sein.

Die lichte Weite der Dichtung 20 verringert sich von der unteren zur oberen Seite hin. Der äußere Umfang der Dichtung 20 folgt diesem Verlauf. D. h. der äußere Umfang der Dichtung 20 verringert sich ebenfalls in deren Bereich oberhalb des Wulstes 22. Daraus ergibt sich der Vorteil, dass bei auftretendem Druck im Weg der Spannlitze und damit innerhalb der Dichtung 20, nämlich beim Verpressen der Hüllrohre 7, dieser Druck die Dichtung 20 insbesondere in diesem Bereich verformen und gegen das obere Segment 6 drücken kann, so dass der Übergang zwischen den Segmenten 4, 6 im Bereich der Hüllrohre 7 sicher abgedichtet ist.

Oberhalb des Wulstes 22 weist die Dichtung 20 an ihrem äußeren Umfang eine parallelogrammförmig ausgebildete, umlaufende Auskragung 23 auf. Diese Auskragung 23 hat eine Höhe von etwa 5mm und überragt um dieses Maß den oberen, umlaufenden Rand 18 der Vorrichtung (8). Diese Auskragung 23 erhöht einerseits die Biegesteifigkeit des in der Vorrichtung 8 aufgenommenen Wulstes 22 und dient andererseits als Barriere für die Verbundmasse 34 zwischen den Segmenten 4, 6, um zu verhindern, dass diese Verbundmasse 34 während der Errichtung des Turmes auf die Oberseite der Dichtung 20 gelangt. Die Dichtung 20 wird zwischen zwei übereinander angeordneten Spannbeton-Fertigelementen 4, 6 im Bereich von sich einander gegenüberstehenden Hüllrohren 7 angeordnet und soll einen druckdichten Übergang zwischen Hüllrohren 7 in den Spannbeton-Fertigelementen 4, 6 schaffen. Daher weist die Dichtung 20 in einer bevorzugten Ausführungsform eine Höhe von etwa 25mm-30mm auf.

Diese Höhe ergibt sich aus der Höhe des Wulstes 22 sowie der Höhe des Abschnittes der Dichtung 20, dessen Querschnitt sich zu der kleineren Öffnung hin verjüngt. Dabei zeigt die Höhe der Auskragung 23 den vorgesehenen Abstand der Segmente 4, 6 an. Der diese Auskragung 23 überragende obere Abschnitt 25 der Dichtung 20 mit dem sich verjüngenden Abschnitt ist etwa 10mm - 15mm höher.

Beim Errichten eines Turmes aus Segmenten 4, 6 wird dieser die Auskragung 23 überragende Teil des Dichtung 20 durch das aufgesetzte Segment 6 heruntergedrückt und drückt wiederum mit seiner Rückstellkraft gegen dieses Segment 6. Dadurch ist eine erste Abdichtung zwischen den Segmenten 4, 6 hergestellt, die auch ohne bereits vorhandenen Druck im Dichtungsinneren ein Austreten der Betonschlämme verhindert.

Da der obere Dichtungsabschnitt 25 durch das aufgesetzte Segment 6 verformt wird, ist der Übergang 29 zwischen der inneren Wandung 27 und der äußeren Wandung 26 so ausgebildet, dass er in einem spitzen Winkel zu der äußeren Wandung 26 und einem stumpfen Winkel zu der inneren Wandung 27 und damit im Wesentlichen vertikal verläuft.

Dies ist in einem zur Verdeutlichung vergrößert dargestellten Kreis besser erkennbar. Hier wurde zur Verbesserung der Übersichtlichkeit nur der Übergang 29 ohne anschließende Kantenlinien dargestellt. Hier sind deutlich der spitze Winkel zwischen der äußeren Wandung 26 des oberen Abschnittes 25 der Dichtung 20 und dem Übergang 29 sowie der stumpfe Winkel zwischen der Wandung 27 und dem Übergang 29 erkennbar.

Dadurch ergibt sich auch bei horizontal herabgedrücktem, oberen Abschnitt 25 der Dichtung 20 am Übergang 29 zwischen innerer 27 und äußerer Wandung 26 eine die Dichtung 20 mit ihrem oberen Abschnitt 25 stärker gegen das Segment 6 drückende Kraft, weil der Übergang 29 auch in dieser Situation noch eine aufwärts verlaufende Oberfläche aufweist.

Nimmt man eine annähernd plane Oberfläche des oberen Segmentes 6 an, kann der obere Abschnitt 25 der Dichtung 20 nicht weiter als bis in die Horizontale herabgebogen werden. Daraus ergibt sich, dass die Dichtung 20 in jedem Fall zuverlässig gegen das obere Segment 6 abdichtet.

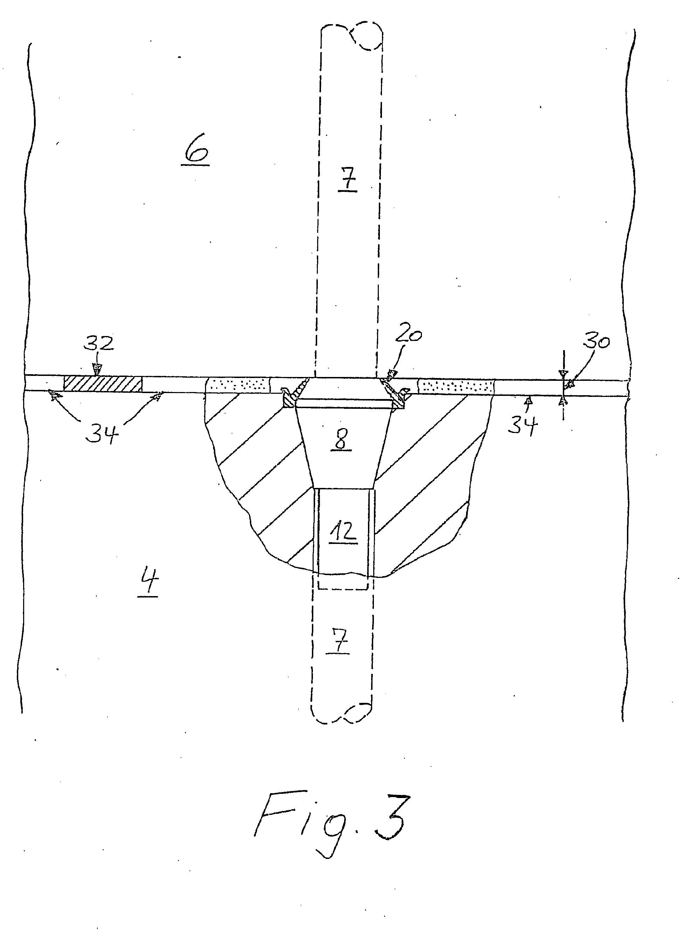

Figur 3 zeigt die Vorrichtung 8 und die darin eingesetzte Dichtung 20 in situ. Dort sind zwei übereinander angeordnete Segmente 4, 6 dargestellt, von denen das untere Segment 4 im Bereich der Vorrichtung 8 aufgebrochen ist. Die Segmente 4, 6 sind derart übereinander angeordnet, dass sich die Hüllrohre 7 in den Segmenten 4, 6 im Wesentlichen fluchtend gegenüberstehen.

Die Vorrichtung 8 ist formschlüssig in das Segment 4 eingesetzt und die Oberkante des umlaufenden Randes 18 schließt bündig mit der Oberfläche des Segmentes 4 ab. Der rohrförmige Abschnitt 12 greift in das im Segment 4 integrierte Hüllrohr 7 ein.

In den zur Aufnahme der Dichtung 20 vorgesehenen Teil der Vorrichtung 8 ist die Dichtung 20 eingesetzt und liegt mit ihrer Oberseite fest an dem oberen Segment 6 an.

Bei der Errichtung des Turmes aus Segmenten 4, 6 werden zunächst auf die nach oben weisende Fläche des zuletzt eingebauten (unteren) Segmentes 4 bevorzugt drei Abstandhalter 32 mit etwa gleichem Abstand auf dem Umfang verteilt angeordnet.

Diese Abstandhalter 32 sind bevorzugt aus Holz und weisen eine Höhe von etwa 5mm (abhängig von der Oberflächenrauhigkeit der Segmente) auf, die dem vorgesehenen Abstand 30 zwischen den Segmenten 4, 6 nach der Montage entspricht. Das E-Modul von Holz in einem Bereich liegt, der einerseits gestattet, dass Holz den im Turm auftretenden Kräften einige Zeit standhalten kann, andererseits jedoch bewirkt, dass Unebenheiten der einander gegenüberliegenden Oberflächen der Segmente 4, 6 sich in das Holz eindrücken und somit Abplatzungen an den Segmenten 4, 6 vermieden werden.

Dabei kann durch eine geeignete Wahl der Höhe der Abstandhalter 32 entsprechend den unvermeidbaren Fertigungsungenauigkeiten der Segmente 4, 6 eine Nivellierung der Segmente 4, 6 erreicht werden.

Daran anschließend wird eine Verbundmasse 34 auf dieser Fläche flächendeckend aufgetragen. Dabei werden die Positionen, an denen sich die Hüllrohre 7 in den Segmenten 4, 6 bzw. das Hüllrohr 7 im oberen Segment 6 und die Vorrichtung 8 mit der Dichtung 20 im unteren Segment 4 gegenüberliegen, beim Auftragen der Verbundmasse 34 ausgespart, indem die Verbundmasse 34 bis an die Auskragung 23 heran aufgetragen wird.

Die flächendeckend aufgetragene Verbundmasse 34 ist bevorzugt ein Epoxidharz und wird mindestens in einer Schichtdicke von etwa 5mm aufgetragen, die im Wesentlichen dem vorgesehenen Abstand 30 zwischen den Segmenten 4, 6 entspricht.

Das als Nächstes einzubauende Segment 6 wird so auf dem unteren Segment 4 platziert, dass die Hüllrohre 7 miteinander eine Flucht bilden. Dabei lagert das obere Segment 6 zunächst auf den drei Abstandhaltern 32, die die Kräfte zwischen den Segmenten 4, 6 übertragen, bis die Verbundmasse 34 ausgehärtet ist.

In dem Maße, in dem die Verbundmasse 34 aushärtet, erfolgt die Kraftübertragung zwischen den Segmenten 4, 6 zunehmend durch die Verbundmasse 34. Da die Festigkeitseigenschaften der Verbundmasse 34 im ausgehärteten Zustand denen von Beton entsprechen, ergibt sich nach dem Aushärten der Verbundmasse 34 eine kraftschlüssige Verbindung zwischen den Segmenten 4, 6 auf dem größten Teil der einander zugewandten Flächen der Segmente 4, 6 (ausgespart bleiben die Bereiche der Übergänge zwischen den Hüllrohren 7).

Nachdem die Verbundmasse 34 ausgehärtet ist, werden alle Kräfte zwischen den Spannbeton-Fertigelementen 4, 6 durch die Verbundmasse 34 übertragen und die Abstandhalter 32 werden nicht mehr belastet.

Wie bereits beschrieben wird auf den vorbeschriebenen Spannbeton-Turm ein Stahlaufsatz aufgesetzt, auf dem dann das gesamte Maschinenhaus der Windenergieanlage zur Anlage kommt. Der Stahlaufsatz auf dem Spannbeton-Turmteil weist unterseitig einen umlaufenden Befestigungsflansch auf. Der Stahlaufsatz wird zunächst an mehreren, zum Beispiel 4 Gewindestangen befestigt, bis die endgültige Befestigung montiert ist. Diese besteht darin, dass die im Turm verlaufenden Spannlitzen auch durch diesen Flansch verlaufen und oberhalb des Flansches die Spannschlösser für die Spannlitzen angebracht werden.

Besteht ein Ringelement aus mehreren Teilsegmenten (eines Schusses), so dass beispielsweise ein Teilsegment im Profil einen Halbkreis bildet, werden diese Teilsegmente miteinander verbunden. Dazu wird bei der Herstellung der Teilsegmente eine sogenannte Rückhängebewehrung eingearbeitet. Diese Rückhängebewehrung, eine Verlängerung der in dem Segment eingearbeiteten Bewehrung, steht aus dem fertigen Teilsegment an dessen Stirnseiten über die Höhe des Segmentes verteilt U-förmig derart hervor, dass die an den Stirnseiten sichtbaren Elemente sprossenartig übereinander angeordnet sind.

Weiterhin sind in der gegenüberliegenden Stirnseite des benachbarten Teilsegmentes (flache) Ausnehmungen vorgesehen, in welche die Rückhängebewehrung eingreifen kann. In der Einbausituation greifen die Rückhängebewehrungen der benachbarten Teilsegmenten demnach kammartig ineinander. Die Übergänge zwischen den Teilsegmenten eines Schusses werden dann mit einem schnell abbindenden Beton ausgegossen.

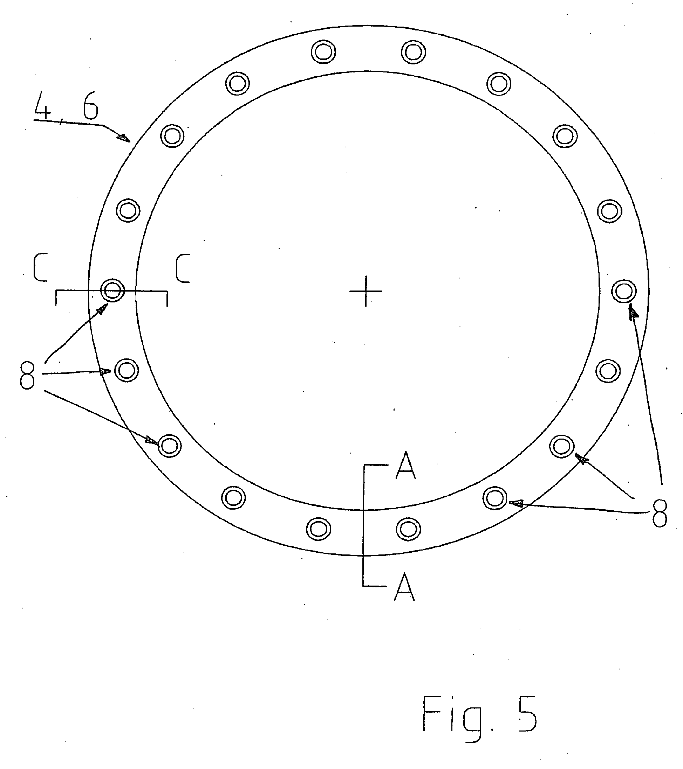

Figur 5 zeigt eine Draufsicht auf ein Vollsegment eines Spannbeton-Turmes mit den Führungstrichtern 8. In dieser Figur sind zwei Schnitte angedeutet, nämlich A und C, die in den nachfolgenden Figuren dargestellt sind.

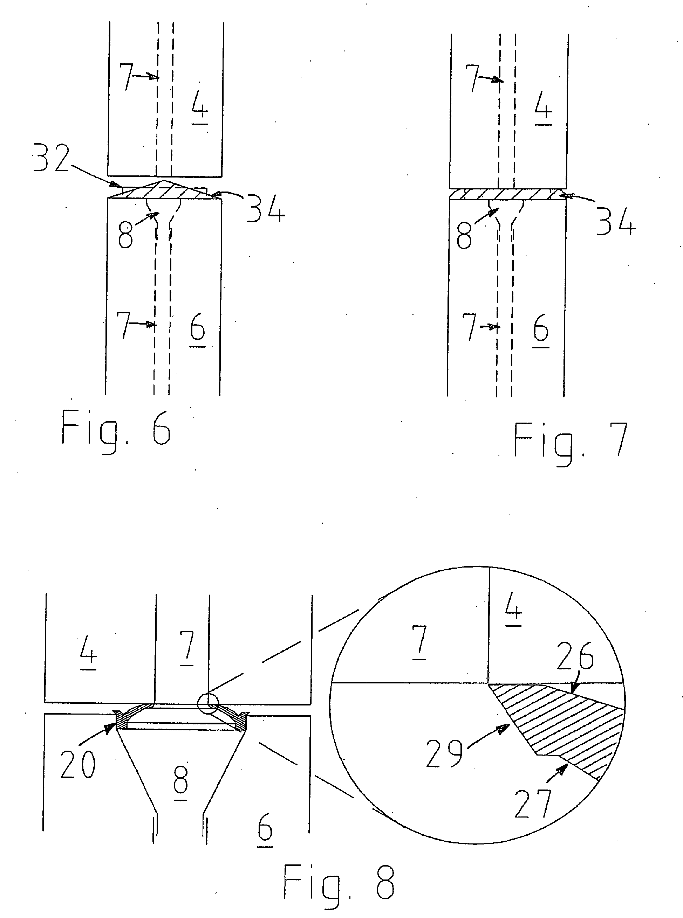

Figur 6 zeigt eine Darstellung im Schnitt A-A in Figur 5 nach dem Vorbereiten des unteren Segmentes 6, aber vor dem Aufsetzen des oberen Segmentes 4. In dieser Figur sind ebenso wie in Figur 7 Führungstrichter 8 und Hüllrohre 7 in den Segmenten 4, 6 verdeckt angedeutet. In dem Spalt zwischen den Segmenten 4, 6 ist ein Abstandhalter 32 sowie die Verbundmasse 34 dargestellt, die in dieser Form aufgetragen wird.

In Figur 7 sind die Segmente 4, 6 in ihrer Einbausituation gezeigt. Die Verbundmasse 34 hat sich im Wesentlichen über die Spaltbreite verteilt und die seitlich hervorquellende Verbundmasse 34 kann einfach mit einer Maurerkelle o. ä. entfernt werden. Das obere Segment 4 ruht auf dem Abstandhalter 32.

Die Dichtung 20 ist in diesen Figuren der Übersichtlichkeit halber nicht dargestellt. Um auch hier die Funktion der Dichtung 20 zu verdeutlichen, ist in Figur 8 ein Schnitt C-C in Figur 5 dargestellt. Hier wurde die Verbundmasse 34 sowie der Abstandhalter 32 fortgelassen. Die Figur zeigt, wie die Dichtung 20 in ihrem oberen Abschnitt durch das obere Segment 4 heruntergedrückt wird.

Die Ausschnitt-Vergrößerung zeigt, dass selbst bei einem in die horizontale herabgedrückten oberen Abschnitt der Dichtung der Übergang 29 durch den spitzen Winkel mit der Oberseite der Dichtung 20 und dem stumpfen Winkel der Unterseite 27 der Dichtung 20 aufwärts verläuft. Bei einer Druckbeaufschlagung im Dichtungsinneren wird dieser Abschnitt daher zuverlässig an das obere Segment 4 gepresst.

Figur 8 zeigt den Querschnitt eines erfindungsgemäßen Turms, welcher im dargestellten Beispiel aus 23 Teilen besteht, wobei jedes Teil im Wesentlichen über eine Höhe von 3,80 m bis 4,00 m verfügt. Wie zu erkennen, verfügt der Turm über ein sich verjüngendes Turmprofil, das heißt, dass der Turm am Boden breiter ist als im oberen Turmbereich. Das Turmprofil ist hierbei insgesamt gekrümmt, das heißt, dass die sich gegenüberliegenden Turmwandungen weder parallel zueinander angeordnet sind, noch in einem festen Winkel zueinander angeordnet sind, sondern dass das Profil bzw. die äußere Kontur leicht gekrümmt ist. Die Zahlen neben der Turmdarstellung geben einerseits die Höhe der unteren Fläche eines Turmsegmentes über dem Erdboden sowie den Durchmesser des Turmsegmentes an dieser Stelle (rechte Zeilenangabe) an. Die Zahlen sind selbstverständlich beispielhaft und keinesfalls auf die Erfindung beschränkend zu verstehen.

## Patentansprüche

1. Dichtung zum Schaffen eines druckdichten Überganges zwischen zwei übereinander angeordneten Spannbeton-Fertigelementen (4, 6), wobei die Dichtung (20) eine Höhe aufweist, die mindestens dem vorgesehenen Abstand (30) der aufeinander angeordneten Spannbeton-Fertigelementen (4, 6) entspricht, **dadurch gekennzeichnet, dass**
die Wanddicke des Dichtungsmaterials ein vorgegebenes Maß nicht überschreitet
und
dass der Übergang (29) zwischen einer äußeren Wandung (26) und einer inneren Wandung (27) des oberen Abschnittes (25) der Dichtung (20) in einem spitzen Winkel zu der äußeren Wandung (26) und einem stumpfen Winkel zu der inneren Wandung (27) der Dichtung (20) verläuft.

2. Dichtung nach Anspruch 1,
**dadurch gekennzeichnet, dass** sich die lichte Weite (21) der Dichtung (20) in axialer Richtung verändert.

3. Dichtung nach einem der Ansprüche 1 bis 2,
**dadurch gekennzeichnet, dass** sich die lichte Weite (21) zu dem unterhalb der Dichtung (20) angeordneten Spannbeton-Fertigelement (4, 6) hin vergrößert.

4. Dichtung nach Anspruch 1,
**dadurch gekennzeichnet, dass** sich die Wanddicke des Dichtungsmaterials entlang der Höhe der Dichtung (20) verändert.

5. Dichtung nach einem der Ansprüche 1 bis 4,
**dadurch gekennzeichnet, dass** der zu dem oberhalb der Dichtung (20) angeordneten Spannbeton-Fertigelement (4, 6) hin weisende Öffnungs-Querschnitt der Dichtung (20) mindestens die gleiche Größe aufweist, wie eines der in die Wandung der Spannbeton-Fertigelementen (4, 6) eingearbeiteten Hüllrohre (7).

6. Dichtung nach einem der Ansprüche 2 bis 5,
**dadurch gekennzeichnet, dass** an der Seite der Dichtung (20) mit der größeren lichten Weite ein Wulst (22) angeformt ist.

7. Dichtung nach Anspruch 6,
**dadurch gekennzeichnet, dass** die Querschnittsform und Abmessungen des Wulstes (22) der von dem äußeren Umfangsrand (10) der Öffnung mit dem größeren Querschnitt (9) der Vorrichtung (8), der Auflagefläche (16) und dem die Auflagefläche umschließenden Rand (18) gebildeten Querschnittsform und deren Abmessungen im Wesentlichen entsprechen.

8. Dichtung nach einem der Ansprüche 6 oder 7,
**dadurch gekennzeichnet, dass** der äußere Umfangsrand der Dichtung (20) oberhalb des Wulstes (22) eine nach außen gerichtete Auskragung (23) mit vorgegebener Höhe und Breite aufweist.

9. Dichtung nach Anspruch 8,
**dadurch gekennzeichnet, dass** die Auskragung (23) im Wesentlichen parallelogrammförmig ausgebildet ist.

10. Turm einer Windenergieanlage, mit einer Mehrzahl von aufeinander angeordneten Spannbeton-Fertigelementen, die mittels Spannelementen miteinander verspannt sind, wobei jedes Spannbeton-Fertigelement im Wesentlichen aus einem Ringelement besteht,
wobei zwischen den aufeinander angeordneten Spannbeton-Fertigelementen jeweils eine Dichtung nach einem der Ansprüche 1 bis 9 angeordnet ist.

11. Turm nach Anspruch 10,
**dadurch gekennzeichnet, dass** jedes Ringelement aus wenigstens zwei Teilsegmenten besteht, wobei ein Teilsegment ein Teilringelement aufspannt.

12. Turm nach Anspruch 10 und 11,
**dadurch gekennzeichnet, dass** als Spannelemente mindestens ein seilartiges Spannelement zum Verspannen der Segmente vorgesehen ist, welche durch einen Hohlraum innerhalb der Wandung der Ringelemente geführt werden.

13. Turm nach einem der Ansprüche 10 bis 12,
**dadurch gekennzeichnet, dass** der Hohlraum nach Aufstellung des Turms der Windenergieanlage mit einem Baustoff, vorzugsweise Beton, gefüllt wird.

14. Turm nach einem der Ansprüche 10 bis 13,
**dadurch gekennzeichnet, dass** im Übergang von einem unteren zu einem daraufliegenden Spannbeton-Fertigelement ein Element zur Aufnahme des Spannstahlelementes vorgesehen ist, wobei das Aufnahmeteil in seinem oberen Rand einen größeren Durchmesser aufweist als an seinem unteren Rand.

## Claims

1. Seal for providing a pressure-tight transition between two prestressed concrete prefabricated elements (4, 6) which are arranged one above the other, the seal (20) having a height which corresponds at least to the provided spacing (30) of the prestressed concrete prefabricated elements (4, 6) which are arranged one on the other, **characterised in that**
the wall thickness of the sealing material does not exceed a predetermined dimension, and
**in that** the transition (29) between an outer wall (26) and an inner wall (27) of the upper portion (25) of the seal (20) extends at an acute angle relative to the outer wall (26) and an obtuse angle relative to the inner wall (27) of the seal (20).

2. Seal according to claim 1,
**characterised in that** the clear width (21) of the seal (20) changes in an axial direction.

3. Seal according to either claim 1 or claim 2,
**characterised in that** the clear width (21) increases towards the prestressed concrete prefabricated element (4, 6) which is arranged below the seal (20).

4. Seal according to claim 1,
**characterised in that** the wall thickness of the sealing material changes over the height of the seal (20).

5. Seal according to any one of claims 1 to 4,
**characterised in that** the opening cross-section of the seal (20) which is directed towards the prestressed concrete prefabricated element (4, 6) which is arranged above the seal (20) has at least the same size as one of the cladding tubes which are incorporated in the wall of the prestressed concrete prefabricated elements (4, 6).

6. Seal according to any one of claims 2 to 5, **characterised in that** a bead (22) is formed at the side of the seal (20) with the larger clear width.

7. Seal according to claim 6,
**characterised in that** the cross-section shape and dimensions of the bead (22) substantially correspond to the cross-section shape formed by the outer peripheral edge (10) of the opening with the larger cross-section (9) of the device (8), the support face (16) and the edge (18) which surrounds the support face, and the dimensions thereof.

8. Seal according to either claim 6 or claim 7,
**characterised in that** the outer peripheral edge of the seal (20) above the bead (22) has an outwardly directed protuberance (23) which has a predetermined height and width.

9. Seal according to claim 8,
**characterised in that** the protuberance (23) is constructed substantially in the form of a parallelogram.

10. Tower of a wind turbine, having a plurality of prestressed concrete prefabricated elements which are arranged one on the other and which are tensioned with respect to each other by means of clamping elements, each prestressed concrete prefabricated element substantially comprising a ring element,
wherein a seal according to any one of claims 1 to 9 is arranged between the prestressed concrete prefabricated elements which are arranged one on the other, respectively.

11. Tower according to claim 10,
**characterized in that** each ring element comprises at least two part-segments, a part-segment clamping a part-ring element.

12. Tower according to claim 10 and claim 11,
**characterised in that** there is/are provided as clamping elements at least one cable-like clamping element which is/are for clamping the segments and which is/are guided through a hollow space within the wall of the ring elements.

13. Tower according to any one of claims 10 to 12,
**characterised in that** the hollow space, after the tower of the wind turbine has been erected, is filled with a construction material, preferably concrete.

14. Tower according to any one of claims 10 to 13,
**characterised in that**, in the transition from a lower prestressed concrete prefabricated element to a prestressed concrete prefabricated element which is positioned thereon, an element for receiving the prestressed steel element is provided, the receiving member having a larger diameter in the upper edge thereof than at the lower edge.

## Revendications

1. Joint étanche pour créer un passage étanche à la pression entre deux éléments préfabriqués en béton précontraint (4, 6) superposés, dans lequel le joint étanche (20) présente une hauteur qui correspond au moins à la distance (30) prévue des éléments préfabriqués en béton précontraint (4, 6) agencés l'un sur l'autre, **caractérisé en ce que**
l'épaisseur de paroi du matériau de joint étanche ne dépasse pas une mesure prédéfinie et
le passage (29) entre une paroi externe (26) et une paroi interne (27) de la section supérieure (25) du joint étanche (20) fait un angle aigu avec la paroi externe (26) et un angle obtus avec la paroi interne (27) du joint étanche (20).

2. Joint étanche selon la revendication 1,
**caractérisé en ce que** la largeur intérieure (21) du joint étanche (20) varie dans la direction axiale.

3. Joint étanche selon l'une quelconque des revendications 1 à 2 **caractérisé en ce que** la largeur intérieure (21) augmente vers l'élément préfabriqué en béton précontraint (4, 6) agencé en dessous du joint étanche (20).

4. Joint étanche selon la revendication 1,
**caractérisé en ce que** l'épaisseur de paroi du matériau du joint étanche varie sur la hauteur du joint étanche (20).

5. Joint étanche selon l'une quelconque des revendications 1 à 4,
**caractérisé en ce que** la section transversale d'ouverture du joint étanche (20) dirigée vers l'élément préfabriqué en béton précontraint (4, 6) agencé au-dessus du joint étanche (20) présente au moins la même dimension que l'un des tubes de gainage (7) enfoncés dans la paroi des éléments préfabriqués en béton précontraint (4, 6).

6. Joint étanche selon l'une quelconque des revendications 2 à 5,
**caractérisé en ce qu'**un renflement (22) est formé sur le côté du joint étanche (20) ayant la plus grande largeur intérieure.

7. Joint étanche selon la revendication 6,
**caractérisé en ce que** la forme en section transversale et les dimensions du renflement (22) correspondent sensiblement à la forme en section transversale formée par le bord de circonférence externe (10) de l'ouverture avec la section transversale (9) plus grande du dispositif (8), la surface d'appui (16) et le bord (18) entourant la surface d'appui et à ses dimensions.

8. Joint étanche selon l'une quelconque des revendications 6 ou 7,
**caractérisé en ce que** le bord de circonférence externe du joint étanche (20) présente, au-dessus du renflement (22), une saillie (23) dirigée vers l'extérieur et ayant une hauteur et une largeur prédéfinies.

9. Joint étanche selon la revendication 8,
**caractérisé en ce que** la saillie (23) est conformée sensiblement en parallélogramme.

10. Mât d'une éolienne comprenant une pluralité d'éléments préfabriqués en béton précontraint agencés l'un sur l'autre, qui sont haubanés l'un avec l'autre au moyen d'éléments d'haubanage, dans lequel chaque élément préfabriqué en béton précontraint se compose sensiblement d'un élément annulaire,
dans lequel respectivement un joint étanche selon l'une quelconque des revendications 1 à 9 est agencé entre les éléments préfabriqués en béton précontraint superposés.

11. Mât selon la revendication 10,
**caractérisé en ce que** chaque élément annulaire est constitué d'au moins deux segments partiels, un segment partiel bloquant un élément d'anneau partiel.

12. Mât selon la revendication 10 ou 11,
**caractérisé en ce que** l'on prévoit comme éléments de blocage au moins un élément de blocage de type câble pour haubaner les segments, qui est guidé à travers un espace creux dans la paroi des éléments annulaires.

13. Mât selon l'une quelconque des revendications 10 à 12,
**caractérisé en ce que** l'espace creux est rempli, après montage du mât de l'éolienne, par un matériau, de préférence du béton.

14. Mât selon l'une quelconque des revendications 10 à 13,
**caractérisé en ce qu'**il est prévu dans le passage d'un élément préfabriqué en béton précontraint inférieur à un élément préfabriqué en béton précontraint superposé un élément pour recevoir l'élément de blocage en acier, dans lequel la partie de réception présente, dans son bord supérieur, un diamètre plus grand que sur son bord inférieur.
